(19) Europäisches Patentamt
European Patent Office
Office européen des brevets

(11) EP 1 262 507 B1

(12) **EUROPEAN PATENT SPECIFICATION**

(45) Date of publication and mention of the grant of the patent:
**03.05.2006 Bulletin 2006/18**

(51) Int Cl.:
***C08G 63/189*** *(2006.01)* ***C08G 63/183*** *(2006.01)*
***C08G 63/78*** *(2006.01)*

(21) Application number: **01112773.5**

(22) Date of filing: **26.05.2001**

(54) **A manufacturing method of a copolyester containing ethylene naphthalate unit and its application**

Herstellungsverfahren eines Copolyesters enthaltend Ethylennaphthalat Einheiten und dessen Verwendung

Méthode de manufacture d'un copolyester contenant des unités d'éthylene naphthalate et son application

(84) Designated Contracting States:
**DE ES FR GB IT NL**

(43) Date of publication of application:
**04.12.2002 Bulletin 2002/49**

(73) Proprietor: **NAN YA PLASTICS CORP.**
**Taipei (TW)**

(72) Inventor: **Zo-Chun, Jen**
**Taipei (TW)**

(74) Representative: **Helms, Joachim**
**Patentanwalt**
**Dantestrasse 27**
**80637 München (DE)**

(56) References cited:
**EP-A- 0 892 000**
**WO-A-00/20368**
**WO-A-97/42250**
**US-A- 5 594 092**
**US-A- 5 895 807**
**US-A- 5 942 596**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

### BACKGROUND OF THE INVENTION

#### Field of the Invention

The present invention relates to a manufacturing method of a copolyester containing ethylene naphthalate unit (EN).

The present invention discloses a manufacturing method of using 2,6-naphthalenedicarboxylic acid (NDA), purified terephthalic acid (PTA), and ethylene glycol (EG) to proceed with esterification reaction or using dimethyl 2,6-naphthalenedicarboxylate (NDC), dimethyl terephthalate (DMT), EG, and transesterification catalyst to proceed with transesterification reaction or using the PTA process. While the esterification reaction reaches 85 - 98 percent of esterification ratio, NDC, EG, and transesterification catalyst are added to proceed with transesterification reaction. The monomer obtained from each of previous process is added with polymerization catalyst thereafter to proceed with polycondensation reaction to produce copolyester. The produced copolyester is further polymerized at solid state to increase its viscosity. Then, the copolyester is ejected to be blow-molded so as to produce the one-way bottle which can be pasteurization.

#### Problems to be Solved by the Present Invention

Polyethylene terephthalate (PET) is widely used in food packaging vessel, fiber, film, and transparent sheet at the present time, particularly in food packaging vessel owing to its environmental advantages such as light weight, high transparency and shinning, good air impermeability, and being recyclable. Therefore, it’s greatly used to manufacture bottles for carbonic beverage, juice, mineral water. However, PET bottles are recently used to contain those which are sensitive to oxygen such as beer, milk, food product, potato product, which require higher standard for the permeability of carbon dioxide. Especially, a common PET bottle is lack of the capability of preventing the oxygen from getting into the bottle and of preventing the carbon dioxide from permeating out of the bottle while containing beer product. Besides, the common PET bottle can not meet the requirement of pasteurization while filling. Therefore, several prior arts disclose the method of improving the air impermeability of present PET bottle. One of the prior arts is to use di-ester or di-acid compound ,which contains di-cyclobenzene structure, such as dimethyl 2,6-naphthalenedicarboxylate or 2,6-naphthalenedicarboxylic acid to react with excess ethylene glycol to obtain homopolymer polyethylene naphthalate (PEN) thereby. PEN owns very good glass transition temperature (Tg) up to 120 °C so as to be able to meet the requirement of pasteurizatio. Consequently, PEN bottle has already been used in packaging beer by some brewer. However, PEN has its limitation in application due to higher price. Therefore, PEN bottles are nowadays recycled for many times. Some of the prior arts then blend PEN and PET so as to decrease the cost and also improve the air impermeability and heat durability. Nevertheless, the blending of the two polymers involve the difference of their adaptability. Therefore, an appropriate physical specification should be concerned when they are blended.

The present invention thus discloses a manufacturing method of PET copolymer which contains an appropriate amount of PEN. The copolymer does not have the said problem of adaptability; and the bottle made of the copolymer is suitable for one-way bottle and can meet the requirement of pasteurization.

#### Description of Prior Arts

The prior arts which intend to solve the said problem of adaptability are discussed as follows:

The US patent No. 5594092 of Shell corp. discloses a process of combining both PTA process and transesterification reaction to produce either PET copolyester containing PEN or PEN copolyester containing PET. The NDC, EG, and transesterification catalyst react to produce monomer - BHEN which is further added with polymerization catalyst to proceed with polymerization so as to have the molecular weight of BHEN monomer being between 4800 and 24200. Then, the BHEN monomer is injected to the esterification reaction of PET process. Further, through polymerization reaction, the PET/PEN copolyester is produced. This patent claims the PEN component of the copolyester is between 2 ~ 5 mole%.

The US patent No. 5895807 of Shell corp. discloses a process of combining both PTA process and transesterification reaction to produce either PET copolyester containing PEN or PEN copolyester containing PET. The NDC, EG, and transesterification catalyst react to produce BHEN. While the molecular weight of BHEN is below 400, the BHEN is injected to the esterification reaction of PET process. Further, through polymerization reaction, the PET/PEN copolyester is produced. This patent claims the PEN component of the copolyester is between 1 ~ 15 mole%.

The US patent No. 6031065 of Wellman corp. discloses a process, wherein the NDC is injected into the first tank of esterification in PTA process. The produced water and methyl alcohol are transformed into carbon dioxide and

water by the combustion equipment at the top of distillation tower.

The PEN disclosed by the ROC patent No. 82111169 of the PET Continental Technology corp. of the USA is applied in multi-layer refilled container which differs from the one-way bottle.

The ROC patent No. 85113329 of Japan Mitsui Chemical Corp. discloses a process of combining NDA and EG into PEN homopolymer on condition of existing in water which differs from the PET copolyester containing a little PEN of the present invention.

The naphthalene irregular copolyester disclosed by ROC patent No. 84107601 of the ROC National Science Committee contains two repeat units. The first repeat unit contains the following formula:

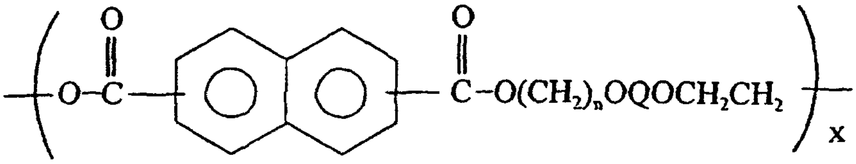

;

Q =

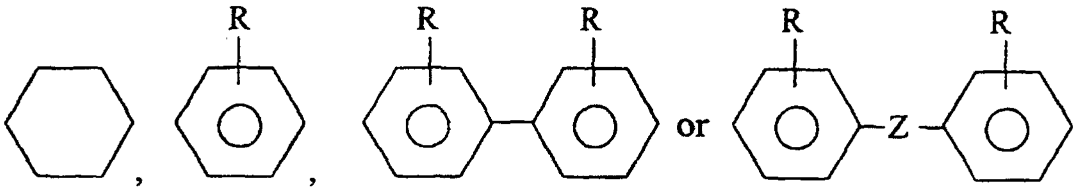

, , or

The second repeat formula contains the following formula:

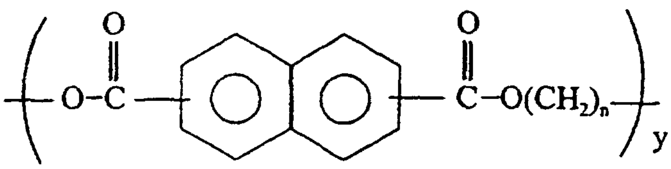

The copolyester thereof differs from the PET copolyester containing a little PEN of the present invention.

The Technical Skill Utilized by the Present Invention

One of the practiced examples is to use a relatively less but appropriate amount of NDC or NDA to react with a relatively greater amount of DMT or PTA so as to produce the PET copolyester which contains a less but appropriate amount of PEN. The main body of the copolyester is the ethylene terephthalate unit, the structural formula of which is as follows:

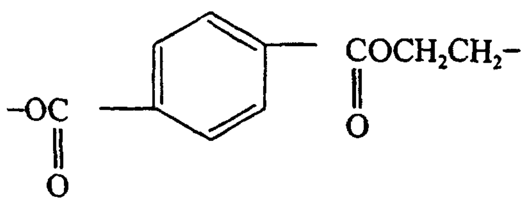

, and the structure formula of the ethylene naphthalate unit which is less but appropriate in terms of quantity is as follows:

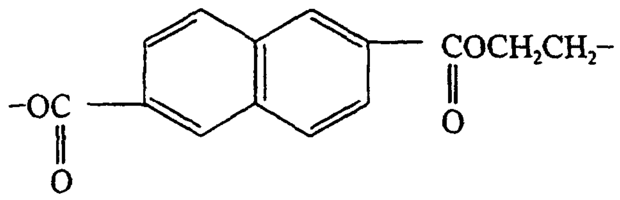

, the bottle made of the said copolyester owns a better air impermeability than the common PET bottle and meets the requirement of hot filling. The air impermeability of the bottle made of the said copolyester may be not so good as that of the bottle made of PEN though, the price of which has the advantage of lower cost. This characteristic contributes to a wide application of the one-way bottle which needs to meet the requirement of pasteurization. In addition, the adaptability between the ethylene terephtahlate unit and ethylene naphthalate unit in the copolyester is good while blended.

The main body of the copolyester in the present invention can be polyethylene terephthalate (PET), or polypropylene terephthalate (PPT), or polybutylene terephthalate (PBT), among which the PET is preferable.

Furthermore, there are two manufacturing methods of PET for the prior art. One is using purified PTA as raw material which goes on esterification reaction with excess EG. While the esterification ratio reaches above 95 percent, the polymerization reaction proceeds so as to obtain PET. This method is called PTA process. The other one is using DMT as raw material which goes on transesterificatin with excess EG and then goes on polymerization so as to obtain PET. This method is called DMT process. The PTA process has advantages of better skill and lower cost. From technical point of view, the PTA process does not produce methyl alcohol so that the wastewater at the top of distillation tower is relatively easier to treat. In addition, the excess EG required for PTA process is less than that required for DMT process. In addition, the PTA process does not need to use the esterification catalyst; however, the DMT process does need to use transesterification catalyst. Therefore, the residual metal in the PET produced by PTA process is relatively low which makes better color and quality of PET. Furthermore, from economical point of view, the cost of PTA is lower than that of DMT and the raw material of PTA is relatively easier to get. Therefore, the present commercialized process mostly used for producing PET is the PTA process.

Due to the continuous expanding of application for the PET, it is considered, from chemical structure point of view, that to add more di-acid and one or more than one di-ol in the PTA process to produce copolyester, or to add more di-ester and one or more than one di-ol in the DMT process to produce copolyester can give PET a different character. The present invention discloses a PET copolyester containing PEN, which can be obtained through adding 2,6-naphthalenedicarboxylic acid during the stage of esterification in PTA process or through adding dimethyl 2,6-naphthalenedicarboxylate and transesterification catalyst during the stage of transesterification in DMT process, then through polymerization reaction.

The PTA process, which is utilized to manufacture PET copolymer containing PEN, has said advantages though, the commercialized NDA is not thoroughly purified and is very expensive; besides, the source to obtain NDA is rare. Therefore, the cost of PET copolyester containing PEN in the PTA process, which uses the NDA in the market as raw material, is relatively high and its color is inclined to yellow. While manufacturing the copolyester through DMT process by using NDC as raw material, there exists the above said defects. While manufacturing the PET copolyester containing PEN through PTA process by using NDC as raw material, the acid component in the PTA process restrains the reaction of NDC which inhibits further polymerization so as not to obtain copolyester.

Therefore, the other practiced example of the present invention is to disclose the manufacturing method of the PET copolyester containing less but appropriate amount of PEN. The said copolyester can be obtained through PTA process by using NDA as raw material, or through DMT process by using NDC as raw material, or through PTA process, under certain conditions, by using NDC as raw material. The obtained copolyester is suitable in manufacturing the one-way bottle which can be pasteurized. In addition, the obtained copolyester owns an advantage of low cost.

It is declared here that the manufacturing method disclosed by the second practiced example of the present invention is not to limit the first practiced example of the present invention but to be the copolyester manufacturing method of the first practiced example of the present invention.

Detailed Description of the Present Invention

One of the manufacturing method of the copolyester of the present invention is to add 2,6-naphthalenedicarboxylic acid (material source: BP inc., material No. NDA-33) into the thick liquid of PTA and EG, or to add NDA-33 during the esterification of PTA and EG. While the esterification ratio reaches above 95 percent, preferably above 96.5 percent, add polymerization catalyst to further go on polymerization at a vacuumed environment.

The content of NDA-33 of the present invention is 5 - 15 mole% based on copolyester, preferably 8 - 15 mole%.

While said content is lower than 5 mole%, the improvement of impermeability is not good enough. While said content is above 15 mole%, the polymer becomes amorphous state which makes agglomeration during the succeeding solid state polymerization so that it is uneasy to raise the viscosity.

The injection time point of NDA-33 of the present invention is at the transesterification ratio being lower than 85 percent, preferably lower than 50 percent. More preferably, the NDA-33 is injected into the thick liquid of PTA and EG. The mole ratio of EG to both PTA and NDA-33 is between 1.1 and 2.5, preferably between 1.5 and 2.0.

The catalyst suitable for polymerization is the antimony catalyst such as antimony trioxide, antimony acetate, or the germanium catalyst such as germanium dioxide, tetraethyl germanium oxide, n-tetrabutyl germanium oxide, or the titanium catalyst such as tetrabutyl titanium oxide. The quantity of the additive is between 0.001 wt% and 0.06 wt% (corresponding to the weight of polymer).

During the esterification reaction, the heat stabilizer such as phosphoric acid or phosphorous acid, and the toner such as cobaltous acetate, and the other characteristic improving additives can be added.

The polymerization can be split into two stages. The first stage is the pre-polymerization, of which the reaction pressure decreases from normal pressure to 30 torr. The reaction duration is one hour. The reaction temperature is between 260 .degree.C and 275 °C The second stage is the main polymerization reacton, of which the reaction pressure is lower than one torr. The reaction temperature is between 275 °C and 290 °C While the reaction proceeds until the intrinsic viscosity is between 0.3 and 0.7, the polymer is compressed to column shape and is quickly cooled down by cooling water and is cut into chips.

The other manufacturing method of the copolyester of the present invention is to add dimethyl 2,6-naphthalenedicarboxylate (NDC, material source: BP inc.) into the melted state solution of PTA and EG, or to add DMT during the transesterification of DMT and EG. In addition, the transesterification catalyst such as manganese acetate is also added. While the side product of transesterification -methyl alcohol is totally removed , add polymerization catalyst to further go on polymerization at a vacuumed environment.

The content of NDC of the present invention is 5 ~ 15 mole% based on copolyester, preferably 8 ~ 15 mole%. While said content is lower than 5 mole%, the improvement of impermeability is not good enough. While said content is above 15 mole%, the polymer becomes amorphous state which makes agglomeration during the succeeding solid state polymerization so that it is uneasy to raise the viscosity.

The injection time point of NDC of the present invention is at the transesterification ratio being lower than 50 percent; preferably the NDC is injected into the solution of DMT and EG. The mole ratio of EG to both DMT and NDC is between 1.1 and 2.5, preferably between 1.5 and 2.0.

The transesterification takes place at a temperature between 150 ~ 260 °C, and at normal pressure, the reaction time is 4 ~ 6 hours, preferably 4 hours depending on the collected amount of methyl alcohol.

The transesterification catalyst is manganese acetate or zinc acetate with a content of 100 ~ 500 ppm based on copolyester, preferably 300 ~ 400 ppm.

During the process of transesterification, the heat stabilizer such as phosphoric acid or phosphorous acid, and the tonner such as cobaltous acetate can be added; besides, other character improving additive can be added as well.

The catalyst suitable for polymerization is the antimony catalyst such as antimony trioxide, antimony acetate, or the germanium catalyst such as germanium dioxide, tetraethyl germanium oxide, n-tetrabutyl germanium oxide, or the titanium catalyst such as tetrabutyl titanium oxide. The quantity of the additive is between 0.001 wt% and 0.06 wt% (corresponding to the weight of polymer).

The process of polymerization is the same with that of said manufacturing method. While the reaction proceeds to this stage that the intrinsic viscosity is between 0.3 - 0.7, the polymer is compressed to column shape and is quickly cooled down by cooling water and is cut into chips.

The other manufacturing method of copolyester of the present invention is to use PTA process. While the esterification ratio reaches 85 % ~ 98 %, the NDC, EG, and transesterification catalyst are injected to go on transesterification. While the side product - methyl alcohol produced by transesterification is totally collected by distillatory, the polymerization catalyst is injected to go on said polymerization. When the intrinsic viscosity reaches 0.3 ~ 0.7, the polymer is compressed to column shape and is quickly cooled down by cooling water and is cut into chips.

According to the manufacturing method of the present invention, the injection time of NDC, EG, and transesterification catalyst is at the stage that esterification ratio of PTA process being between 85 % ~ 98 %, preferably 93 % ~ 97.5 %. If the injection time is at the stage that esterification ratio being lower than 85 %, the transesterification can not proceed because the transesterification catalyst loses its activation caused by the excessive acid component; consequently, the NDC can not be further processed to copolyester. While the esterification ratio is relatively high, say higher than 98 %, the injection of NDC, EG, and transesterification catalyst can make the transesterification proceed. However, the transesterification reaction is accompanied by the esterification , which makes the esterification ratio too high. Eventually, the succeeding polymerization reaction can not reach enough molecular weight and the color of the product is yellow dark gray; in addition, the quantity of side product is too much.

The quantity of the addition of transesterification catalyst in this manufacturing method is between 100 ~ 500

ppm based on the weight of low polymer BHEN which is obtained from NDC and EG, preferably between 300 ~ 400 ppm.

The mole ratio of NDC and EG in this manufacturing method is between 1.2 ~ 2.0, preferably between 1.6 ~ 2.0.

The methyl alcohol and water, which is produced by transesterification after the injection of NDC, of this manufacturing method is distilled out at the top of distillatory tower and transferred to the wastewater treatment system. The EG produced by esterification is distilled out at the bottom of distillatory tower and transferred to other EG purifying distillatory to go on further distillation instead of being recycled back to the transesterification process.

In this manufacturing method, it should be assured that the transesterification of NDC has been completed and the produced methyl alcohol has been removed by distillatory. Otherwise, part of the non-reacted NDC will produce methyl alcohol during polymerization which causes the vacuum loading of polymerization and part of NDC will form dead-end group containing methyl ester so as not to further react to produce copolyester.

The reaction time of transesterification of said manufacturing method is about 1 ~ 4 hours, preferably 2 ~ 3 hours.

In the said esterification process, the heat stabilizer such as phosphoric acid or phosphorous acid, and the tonner such as cobaltous acetate can be added; besides, other character improving additive can be added as well.

The catalyst suitable for polymerization of this manufacturing method is the common antimony catalyst such as antimony trioxide, antimony acetate, or the germanium catalyst such as germanium dioxide, tetraethyl germanium oxide, n-tetrabutyl germanium oxide, or the titanium catalyst such as tetrabutyl titanium oxide. The quantity of the additive is between 0.001 wt% and 0.06 wt% (corresponding to the weight of polymer). The preferable polymerization catalyst for this manufacturing method is antimony trioxide with an preferable addition quantity of 300 ~ 600 ppm based on the weight of copolymer. While regarding the color of end polymer, the germanium dioxide can provide better color.

The copolyester obtained from the above said three manufacturing methods contains 5 ~ 15 mole% of NDC or NDA based on copolyester, preferably 8 ~ 15 mole%. The obtained copolyester needs to be further solid state polymerized so as to increase the intrinsic viscosity to 0.7 ~ 1.0, preferably 0.75 ~ 0.85, in order to be utilized in producing the one-way and pasteurizable bottle of the first practiced example disclosed by the present invention.

The solid state polymerization process suitable for the present invention is the process of utilizing batch or continuous solid state polymerization equipment on well-known vacuum condition or on a condition of transferring inert gas such as helium. The crystallization rate of the copolymer becomes slow due to the presence ofNDC or NDA. Therefore, a pre-crystallization step is required before solid state polymerization to refrain chips from agglomeration. The present invention uses twin-awl shape vacuum solid state polymerization tank to which the copolyester is transferred. The vacuum intensity in the tank is vacuumed below 2 torr by vacuum pump. The temperature of chips is increased to 100 ~ 120 °C and maintained for 30 minutes to 2 hours and is further increased to 150 ~ 180 °C and maintained for 2 ~ 8 hours and is furthermore increased to 200 ~ 215 °C and maintained for 5 hours to 25 hours. The said condition of solid state polymerization varies with the viscosity increasing rate of solid state polymerization and the situation of chip agglomeration. Basically, the higher the added quantity ofNDC or NDA, the smoother the proceeding condition. However, it takes longer time to reach the required intrinsic viscosity. The intrinsic viscosity of the present invention is between 0.70 ~ 1.0, preferably between 0.75 ~ 0.85, after solid state polymerization.

The copolyester obtained from the manufacturing method disclosed by the present invention is directly manufactured to bottles with a volume of 2 liters and a thickness of about 0.4 mm by an eject blow molder of Nippon Precision ASB 50H II model.

The bottle made of the copolyester obtained from the manufacturing method of the present invention is cut and spread to a sheet shape and measured the carbon dioxide permeability by PERMATRAN C4/40 of MOCON and measured the oxygen permeability by OXTRAN of MOCON.

The bottle made of the copolyester obtained from the manufacturing method of the present invention is filled with distilled water up to a certain line mark and soaked in a water basin with a constant temperature of 65 °C for 30 minutes. Then, the soaked bottle is taken out and measured the difference of the length of the bottle and the difference between the distilled water level and the certain line mark.

Examples Explanation

Example 1~4

A set of batch type reaction composite equipment with a batch capacity of 12 kg copolyester is used as a reactor and the BHET monomer of PTA and EG with a degree of polymerization of about 5 is used as initiator (the monomer is obtained from the PTA process). The EG with the same amount of mole is then added. Moreover, 3 mole% of NDA (material No. is NDA-33, BP corp.) which is based on copolyester is added for Example 1; and 5 mole% of NDA which is based on copolyester is added for Example 2; and 8 mole% of NDA which is based on copolyester is added for Example 3; and 15 mole% of NDA which is based on copolyester is added for Example 4. While the temperature of the material reaches 190 °C, start the esterification for 2 hours. The pressure of esterification is 1.0 kgf/cm$^2$ for the first one and half hours and normal pressure for the last half hour. Ten minutes before the end of esterification, add phosphoric

acid as stabilizer and antimony acetate as catalyst and cobaltous acetate as tonner so as to proceed with pre-polymerization. The vacuum intensity changes from 760 torr to 20 torr for the first hour. Furthermore, the vacuum intensity reaches below one torr, preferably 0.5 torr, so as to proceed with polycondensation. The stirring current of the reactor increases as the polymerization degree increases. While the stirring current reaches a steady state (controlled by the control board), the rotation speed of the stirrer start to decrease. When the rotation speed of the stirrer decreases to 25 rpm (the rotation speed of the stirrer is set at 60 rpm at the beginning of the reaction), the reaction stops. The polymer in the reactor is compressed by nitrogen gas with a pressure of 1 kgf/$cm^2$ to column shape and is quickly cooled down by cooling water and is cut into chips.

The obtained copolyester is put into a twin-awl revolving vacuum drying tank to proceed with solid state polymerization in order to increase the viscosity of the copolyester. The tank is equipped with a set of vacuumizer. The exterior of the tank is jacketed with hot oil and insulating cotton. In the early stage of solid state polymerization for Example 1 ~ 3, the temperature of the hot oil is set at 120 °C and that of chips is about 110 °C for two hours. Then the temperature of the hot oil is set at 180 °C and that of chips is about 160 °C for four hours of heating time. The temperature of the hot oil is further set at 220 °C and that of chips reaches 200 °C and lasts 25 hours. Finally, the temperature of chips reaches 215 °C The copolyester for Example 4 can not further proceed with solid state polymerization due to its closing to complete amorphous state; consequently, it is dried at a temperature of 80 °C for eight hours.

The copolyester obtained from above said manufacturing method is manufactured by a Nippon Precision ASB eject blow molder to bottles with a volume of 2 liters. Then, the body portion of the bottle is cut and analyzed the permeability of oxygen and carbon dioxide.

To assure the obtained bottle can be pasteurized, the bottle is filled with distilled water and is caped and is put in a water tank with a constant temperature of 65 °C for 30 minutes. Then, the bottle is taken out and measured the variation of water level in the bottle of before and after pasteurization and the change of the body length of the bottle.

Comparative Example 1

The synthesis method and character testing method for this Comparative Example are the same with those of Example 1~3. However, 2.5 mole% of isophthalic acid is added instead of NDA for the Comparative Example.

The results of the said methods are listed in Table 1-1 and Table 1-2 which show that the copolyester added with 5 mole% PEN not only decreases 16 percent of oxygen permeability but also passes the heat resisting test at 65 °C for 30 minutes. Therefore, it is certained by the present invention that the copolyester with higher than 5 mole% of PEN will have higher air impermeability and heat resistance. Particularly, the copolyester with 8 mole% ~ 15 mole% of PEN is more suitable for one-way bottle which needs to be pasteurized. This kind of bottle has potential for being used as beer container. From cost point of view, this kind of bottle is one of very competitive alternatives despite its air impermeability and heat resistance being inferior to those of bottles made of pure PEN.

Example 5~7

Utilize the reactor and measuring instrument and method similar to those of Example 1 ~ 4, and use di-ester as initiator. Add DMT, EG, NDC, and catalyst-manganese acetate into the reactor so as to proceed with transesterification reaction. The NDC contents are 5 mole%, 8 mole%, and 15 mole% based on copolyester for Example 5, 6, and 7 respectively. The mole ratio of EG against NDC and DMT is 2:1.

Manganese acetate acts as a transesterification catalyst with a concentration of 400 ppm. After the methyl alcohol which is a side product of transesterification is completely collected, the heat stabilizer- phosphoric acid and the polymerization catalyst-antimony trioxide and the tonner-cobaltous acetate are added to proceed with the succeeding reaction of polymerization of the said Examples.

The results are shown in Table 2-1 and Table 2-2, which shows that the desired functions are very close to those of the copolyester synthesized by using NDA as raw material, which means that they are all capable of improving the air impermeability and heat resistance.

Comparative Example 2

The synthesis method and character testing method for this Comparative Example are the same with those of Example 5~7. However, NDC is not added for this Comparative Example. The mole ratio of EG against DMT is 2:1.

Example 8~11

Utilize the reactor and measuring instrument and method similar to those of Example 1~4. Add NDC, and catalyst for transesterification-manganese acetate into BHET monomer obtained from PTA process so as to proceed

with transesterification reaction.
For Example 8, the time point for the addition of NDC is while the esterification ratio of BHET monomer reaches about 85 percent. The content of NDC is about 8 mole% based on copolyester.
For Example 9, the time point for the addition of NDC is while the esterification ratio of BHET monomer reaches about 85 percent. The content of NDC is about 15 mole% based on copolyester.
For Example 10, the time point for the addition of NDC is while the esterification ratio of BHET monomer reaches about 98 percent. The content ofNDC is about 8 mole percent based on copolyester.
For Example 11, the time point for the addition ofNDC is while the esterification ratio of BHET monomer reaches about 98 percent. The content of NDC is about 15 mole percent based on copolyester.

The amount of added manganese acetate is 400 ppm based on the content of BHEN, which means

$$\text{the amount of added manganese acetate (kg)} = 12 / (\text{molecular weight of PETNx}) * (x / 100) * (\text{molecular weight of ethylene naphthalate}) * 400\ \text{ppm} * 10^{-6}$$

where
molecular weight of PETNx = x * 242 + (1-x) * 192
x stands for (number of mole * 100) of ethylene naphthalate in copolyester, for example, 8 mole percent EN in PET copolyester can be expressed as PETN8, x = 8 molecular weight of ethylene naphthalate = 242

The mole ratio of EG against NDC is 2:1. Heat up to 180 °C so as to melt NDC. While the temperature of BHET reaches 170 °C, into which the EG solution with NDC is injected.

The results are shown as Table 3-1 and Table 3-2.

Table 1-1. The copolyester produced by using NDA as raw material which is added into PTA process

| LOT NO | | Comparative Example 1. | Example 1. | Example 2. | Example 3. | Example 4. |
|---|---|---|---|---|---|---|
| Component | NDA-3 mole% | 0 | 3 | 5 | 8 | 15 |
| | PIA mole% | 2.5 | 0 | 0 | 0 | 0 |
| | $H_3PO_4$ ppm | 150 | 150 | 150 | 150 | 150 |
| | sb(OAc),ppm | 500 | 500 | 500 | 500 | 500 |
| | $Co(OAC)_2$ ppm | 100 | 100 | 100 | 100 | 100 |
| Temperature of esterifitaion °C | | 190~236 | 190~233 | 190~234 | 190~232 | 190~231 |
| Pressure of esterification kg/$cm^2$ | | 1.0 | 1.0 | 1.0 | 1.0 | 1.0 |
| Pressurized estenfication time:min<br>Normal pressure esterification time: min | | 90<br>30 | 90<br>30 | 90<br>30 | 90<br>30 | 90<br>30 |
| Tempaature of prepolymerization °C | | 221~255 | 225-257 | 226~252 | 225~253 | 226-255 |
| Duration of prepolymerization : min | | 60 | 60 | 60 | 60 | 60 |
| Temperature of main polymerization: °C | | 252.4~286.5 | 257~282.6 | 252~283.5 | 253~284.6 | 255~281.7 |
| Duration of main polymerization: min | | 0.36 | 0.35 | 0.39 | 0.35 | 0.41 |
| Duration of main polymerization: min | | 107 | 112 | 112 | 111 | 103 |
| IV of raw chip dl/g | | 0.634 | 0.597 | 0.603 | 0.591 | 0.62 |
| DEG content of raw chip mole% | | 2.35 | 1.90 | 2.15 | 1.77 | 1.60 |
| Acid value of raw chip | | 8 | 10 | 11 | 12 | 14 |

Table continued

| LOT NO | | Comparative Example 1. | Example 1. | Example 2. | Example 3. | Example 4. |
|---|---|---|---|---|---|---|
| Color of raw chip Lab (Hunter) | | 49.95/ -0.81/ / 2.77 | 49.56/ -0.80/ 3.52 | 50.30/ -1.45/ 4.11 | 50.40/ -1.5/ 4.3 | 49.10/ -2.1/ 5.51 |
| DSC analysis of raw chip (2nd run) | Tg °C | 77.79 | 80.36 | 80.48 | 81.47 | 85.1 |
| | Tch °C<br>ΔHc j/g | 158.16<br>32.08 | 164.18<br>32.94 | 179.12<br>27.88 | 184.14<br>23.22 | 185.13<br>5.21 |
| | Tm °C<br>ΔHm j/g | 244.33<br>32.03 | 246.31<br>33.88 | 240.53<br>26.72 | 234.18<br>15.89 | 222.1<br>3.57 |
| Temperature of SSP ester chip | | 200~215 | 200~215 | 200~215 | 200~205 | * |
| Duration of SSP hr | | 25 | 25 | 25 | 25 | * |
| IV of SSP chip | | 0.867 | 0.768 | 0.840 | 0.730 | * |
| *The PET copolyester containing 15 mole% of EN is close to complete amorphous state so as not to easily proceed with solid state polymerization. | | | | | | |

Table 1-2. Character of the bottle made of the copolyester produced by using NDA as raw material which is added into PTA process

| LOT NO | | Comparative Example 1. | Example 1. | Example 2. | Example 3. | Example 4. |
|---|---|---|---|---|---|---|
| Temperature of Nippon Precision ASB 50H 11 melting blow molder | | 275~280°C | 275~280°C | 280~285°C | 285~290°C | 275~280°C |
| $O_2$ permeability of bottle body cc/m$^2$/day | | 9.904 | 8.900 | 8.263 | 7.002 | 6.512 |
| $CO_2$ permeability of bottle body cc/m$^2$/day | | 52.531 | 43.610 | 39.662 | 31.509 | 28.012 |
| Heatresistance Heatresistance test in pasteurization* | Difference of water level in the bottle: mm | 31 | 24 | 19 | 14 | 8 |
| | Change in the length of the bottle:mm | 2.5 | 2.0 | 1 | 0.5 | 0.5 |
| | Evaluation on heat resistance: | X | Δ | O | G | G |
| * Condition for pasteurization: the bottle which is filled with distilled water at normal temperature is soaked in hot water with a temperature of 65 °C for 30 minutes.<br>X: change shape too much Δ: change shape a little too much<br>O: OK G: Good | | | | | | |

Table 2-1. The copolyester produced by using NDC as raw material which is added into DMT process

| LOT NO | | Comparative Example 2. | Example 5. | Example 6. | Example 7. |
|---|---|---|---|---|---|
| Component | NDC mole% | 0 | 5 | 8 | 15 |
| | DMT mole% | 2.5 | 0 | 0 | 0 |
| | $H_3PO_4$ ppm | 150 | 150 | 150 | 150 |
| | $Sb_2O_3$ ppm | 500 | 500 | 500 | 500 |
| | $Co(OAC)_2$ ppm | 100 | 100 | 100 | 100 |
| Temperature of transesterification °C | | 158~230 | 160~234 | 160~232 | 160~231 |
| Pressure of transesterification $kgf/cm^2$ | | Normal pressure | Normal pressure | Normal pressure | Normal pressure |
| Transesterification time:min | | 240 | 240 | 240 | 240 |
| Temperature of prepolymerization °C | | 230~263 | 234~264 | 232~263 | 231~263 |
| Duration of prepolymerization:min | | 80 | 80 | 80 | 80 |
| Temperature of main polymerization °C: | | 263~286.5 | 264~283.5 | 263~284.6 | 263~281.7 |
| Vacuum intensity of main polymerization torr | | 0.37 | 0.39 | 0.39 | 0.35 |
| Duration of main polymerization: min | | 120 | 121 | 125 | 115 |
| IV of raw chip dl/g | | 0.630 | 0.615 | 0.608 | 0.580 |
| DEG content of raw chip mole% | | 2.89 | 2.91 | 2.76 | 2.63 |
| Acid value of raw chip | | 14 | 17 | 20 | 21 |
| Color of raw chip Lab (Hunter) | | 45.35/ -0.72/ 2.89 | 45.79/ -0.31/ 3.10 | 45.67/ -0.55/ 3.22 | 44.12/ -0.17/ 3.79 |
| DSC analysis of raw chip (2nd run) | Tg °C | 77.71 | 80.5 | 81.08 | 85.1 |
| | Tch °C ΔHc j/g | 157.46 33.58 | 180.15 24.38 | 185.8 9.53 | 188.37 4.23 |
| | Tm °C ΔHm j/g | 244.10 32.53 | 240.36 22.72 | 232.12 6.795 | 223.1 2.93 |
| Temperature of SSP ester chip °C | | 200~215 | 200~215 | 200~205 | * |
| Duration of SSP hr | | 25 | 25 | 25 | * |
| IV of SSP chip | | 0.854 | 0.850 | 0.773 | * |
| *The PET copolyester containing 15 mole% of EN is close to complete amorphous state so as not to easily proceed with solid state polymerization. | | | | | |

Table 2-2. Character of the bottle made of the copolyester produced by using NDA as raw material which is added into PTA process

| LOT NO | | Comparative Example 2. | Example 5. | Example 6. | Example 7. |
|---|---|---|---|---|---|
| Temperature of Nippon Precision ASB 50H If melting blow molder | | 275~280°C | 280~285 °C | 285~290°C | 275-280°C |
| $O_2$ permeability of bottle body cc/m$^2$/day | | 11.163 | 9.460 | 7.814 | 7.125 |
| $CO_2$ permeability of bottle body cc/m$^2$/day | | 55.457 | 48.802 | 37.156 | 33.274 |
| Heat resistance test in pasteurization* | Difference of water level in the bottle: mm | 30 | 18 | 15 | 8 |
| | Change in the length of the bottle:mm | 2.4 | 0.9 | 0.5 | 0.4 |
| | Evaluation on heal resistance | X | O | G | G |
| * Condition for pasteurization: the bottle which is filled with distilled water at normal temperature is soaked in hot water with a temperature of 65 °C for 30 minutes.<br>X: change shape too much Δ: change shape a little too much<br>O: OK G: Good | | | | | |

Table 3-1. The copolyester produced by using NDC as raw material which is added into PTA process

| LOT NO | | Comparative Example 1. | Example 8. | Example 9. | Example 10. | Example 11. |
|---|---|---|---|---|---|---|
| Component | NDC mole% Injection time point | 0 | 8 BHET C%=85 | 15 BHET C%=85 | 8 BHET C%=98 | 15 BHET C%=98 |
| | PIA mole% | 2.5 | 0 | 0 | 0 | 0 |
| | $H_3PO_4$ ppm | 150 | 150 | 150 | 150 | 150 |
| | $Sb_2O_3$ ppm | 500 $Sb(OAc)_3$ | 415 | 415 | 415 | 415 |
| | $Co(OAc)_2$, ppm | 100 | 100 | 100 | 100 | 100 |
| Temperature of esterification/ transesterification °C | | 190~236 | 158~233 | 159~234 | 158~232 | 158~231 |
| Pressme of esterification kgf/cm$^2$ | | | Normal pressure | Normal pressure | Normal pressure | Normal pressure |
| Esterification/ transesterification time: min | | Pressure esterification 90 normal pressure ester 30 | 120 | 120 | 120 | 120 |
| Temperature of prepolymerization °C | | 236~255 | 233-257 | 234~252 | 232-253 | 231~255 |
| Duration of prepolymerization: min | | 60 | 60 | 60 | 60 | 60 |
| Temperature of main polymerization: °C | | 252.4~286.5 | 257~284.2 | 252~286.3 | 253~286.6 | 255~286.7 |

Table continued

| LOT NO | | Comparative Example 1. | Example 8. | Example 9. | Example 10. | Example 11. |
|---|---|---|---|---|---|---|
| Vacuum intensity of main polymerization torr | | 0.36 | 0.39 | 0.45 | 0.45 | 0.43 |
| Duration of main polymerization: min | | 107 | 135 | 141 | 90 | 97 |
| IV of raw chip dl/g | | 0.634 | 0.597 | 0.578 | 0.608 | 0.590 |
| DEG content of raw chip mole% | | 2.35 | 2.57 | 3.11 | 2.97 | 2.92 |
| Acid value of raw chip | | 8 | 13 | 17 | 12 | 17 |
| Color of raw chip Lab (Hunter) | | 49.95/ -0.81/ 2.77 | 38.52/ 0.21/ 4.36 | 40.10/ 0.32/ 4.82 | 46.17/ -0.85/ 3.58 | 42.56/ -0.70/ 4.11 |
| DSC analysis of raw chip ($2^{nd}$ run) | Tg °C | 77.79 | 81.9 | 80.48 | 81.47 | 85.1 |
| | Tch °C<br>ΔHc j/g | 158.16<br>32.08 | 184.8<br>17.9 | 187.44<br>0.99 | 185.8<br>9.53 | 183.7<br>1.21 |
| | Tm °C<br>ΔHmj/g | 244.33<br>32.03 | 233.1<br>12.7 | 228.73<br>0.43 | 232.1<br>6.80 | 225.5<br>0.98 |
| Temperature of SSP ester chip °C | | 200~215 | 200~215 | * | 200-205 | * |
| Duration of SSP hr | | 25 | 25 | * | 25 | * |
| IV of SSP chip | | 0.867 | 0.763 | * | 0.745 | * |
| *The PET copolyester containing 15 mole% of EN is close to complete amorphous state so as not to easily proceed with solid state polymerization. | | | | | | |

Table 3-2. Character of the bottle made of the copolyester produced by using NDC as raw material which is added into PTA process

| LOT NO | | Comparative Example 1. | Example 8. | Example 9. | Example 10. | Example 11. |
|---|---|---|---|---|---|---|
| Temperature of Nippon Precision ASB 50 H 11 melting blow molder | | 275~280°C | 285~290°C | 275~280°C | 285~290°C | 275~280°C |
| $O_2$ permeability of bottle body $cc/m^2/day$ | | 9.904 | 8.126 | 7.105 | 7.932 | 6.955 |
| CO2 permeability of bottle body $cc/m^2/day$ | | 52.531 | 35.761 | 29.896 | 33.758 | 29.825 |
| Heat resistance test in pasteurization* | Difference of water level in the bottle: mm | 31 | 14 | 9 | 13 | 9 |
| | Change in the length of the bottle:mm | 2.5 | 0.6 | 0.4 | 0.6 | 0.4 |
| | | | | | | |
| | | Comparative Example 1. | Example 8. | Example 9. | Example 10. | Example 11. |
| | Evaluation on heat resistance | X | G | G | G | G |

* Condition for pasteurization: the bottle which is filled with distilled water at normal temperature is soaked in hot water with a temperature of 65 °C for 30 minutes.
X: change shape too much    Δ: change shape a little too much
O: OK    G: Good

## Claims

1. A process for producing a copolyester containing ethylene naphthalate unit, comprising adding dimethyl 2,6-naphthalenedicarboxylate and transesterification catalyst to the reaction mixture for direct esterification of purified terephthalic acid and ethylene glycol (PTA process) at a stage where the esterification ratio is between 85 % and 98 %; and while side product of methyl alcohol is completely removed, subsequently adding polycondensation catalyst to proceed with polycondensation up to obtain a copolyester with intrinsic viscosity between 0.3 - 0.7 dl/g by copolymerized with the following structure of 5 - 15 mole% based on the total amount of copolyester from copolymerization

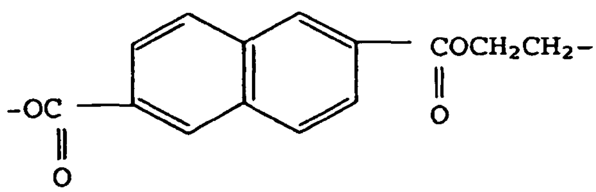

2. A process for producing a copolyester containing ethylene naphthalate unit as defined in Claim 1, wherein said transesterification catalyst is manganese acetate or zinc acetate with an added amount of 100 - 500 ppm based on total amount of ethylene naphthalate unit.

3. A process for producing a copolyester containing ethylene naphthalate unit as defined in Claim 1, wherein the dimethyl 2,6-naphthalenedicarboxylate is added during 93 - 97.5 % of esterification ratio of PTA process.

4. A process for producing a copolyester containing ethylene naphthalate unit as defined in Claim 1, wherein the

dimethyl 2,6-naphthalenedicarboxylate is added during 96 - 97.5 % of esterification ratio of PTA process.

**5.** A process for producing a copolyester containing ethylene naphthalate unit as defined in Claim 1, wherein said polymerization catalyst can be chosen from one of antimony catalysts including antimony trioxide and antimony acetate, or chosen from one of germanium catalysts including germanium dioxide, tetraethyl germanium oxide and n-tetrabutyl germanium oxide, or chosen from one of titanium catalysts including tetrabutyl titanium oxide; the addition amount of polymerization catalyst is 10 - 600 ppm based on the weight of copolyester.

**6.** A process for producing a copolyester containing ethylene naphthalate unit as defined in Claim 1, wherein said polymerization catalyst is antimony trioxide and the addition amount is the range of 300 - 600 ppm based on the weight of the copolyester.

**7.** A process for producing a copolyester containing ethylene naphthalate unit as defined in Claim 1, wherein the main part of the copolyester is polyethylene terephthalate unit.

**8.** A process for producing a copolyester containing ethylene naphthalate unit as defined in Claim 1, wherein the content of ethylene naphthalate unit is 8 - 15 mole% based on the copolyester.

**9.** A process for producing a copolyester containing ethylene naphthalate unit as defined in Claim 1, wherein the obtained copolyester has an intrinsic viscosity between 0.7 - 1.0 dl/g after solid state polymerization.

**Patentansprüche**

**1.** Verfahren zur Herstellung eines Copolyesters, der eine Ethylennaphthalat-Einheit enthält, umfassend die Zugabe von Dimethyl-2,6-naphthalindicarboxylat und Umesterungskatalysator zu dem Reaktionsgemisch zur direkten Veresterung von gereinigter Terephthalsäure und Ethylenglykol (PTA-Verfahren) bei der Stufe, bei der der Veresterungsgrad zwischen 85 % und 98 % beträgt, während Methylalkohol als Nebenprodukt vollständig entfernt wird, anschließende Zugabe eines Polykondensationskatalysators, um mit der Polykondensation fortzufahren, um einen Copolyester mit einer intrinsischen Viskosität zwischen 0,3 - 0,7 dl/g zu erhalten, der mit 5 - 15 Mol% der folgenden Struktur, bezogen auf die Gesamtmenge des Copolyesters der Copolymerisation, copolymerisiert wird.

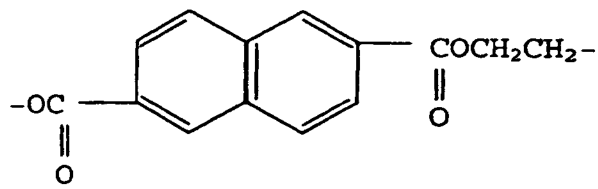

**2.** Verfahren zur Herstellung eines Copolyester, der eine Etyhlennaphthalat-Einheit enthält, wie im Anspruch 1 angegeben, wobei der Umesterungskatalysator Manganacetat oder Zinkacetat ist, das in einer Menge von 100 - 500 ppm, bezogen auf die Gesamtmenge der Ethylennaphthalat-Einheit, zugegeben wird.

**3.** Verfahren zur Herstellung eines Copolyester, der eine Ethylennaphthalat-Einheit enthält, wie im Anspruch 1 angegeben, wobei das Dimethyl-2,6-naphthalindicarboxylat zugegeben wird, wenn der Veresterungsgrad des PTA-Verfahrens 93 - 97,5 % beträgt.

**4.** Verfahren zur Herstellung eines Copolyester, der eine Ethylennaphthalat-Einheit enthält, wie im Anspruch 1 angegeben, wobei das Dimethyl-2,6-naphthalindicarboxylat zugegeben wird, wenn der Veresterungsgrad des PTA-Verfahrens 96 - 97,5 % beträgt.

**5.** Verfahren zur Herstellung eines Copolyester, der eine Ethylennaphthalat-Einheit enthält, wie im Anspruch 1 angegeben, wobei der besagte Polymerisationskatalysator aus einem Antimon-Katalysator, einschließlich Antimontrioxid und Antimonacetat, oder einem Germanium-Katalysator, einschließlich Germaniumdioxid, Tetraethylgermaniumoxid und n-Tetrabutylgermaniumoxid, oder einem Titan-Katalysator, einschließlich Tetrabutyltitanoxid ausgewählt werden kann, wobei der Polymerisationskatalysator in einer Menge von 10 - 600 ppm zugegeben wird, bezogen

auf das Gewicht des Polyesters.

6. Verfahren zur Herstellung eines Copolyester, der eine Ethylennaphthalat-Einheit enthält, wie im Anspruch 1 angegeben, wobei der besagte Polymerisationskatalysator Antimontrioxid ist und die Zugabemenge im Bereich von 300 - 600 ppm liegt, bezogen auf das Gewicht des Polyester.

7. Verfahren zur Herstellung eines Copolyester, der eine Ethylennaphthalat-Einheit enthält, wie im Anspruch 1 angegeben, wobei der Hauptgehalt des Copolyesters eine Polyethylenterephthalat-Einheit ist.

8. Verfahren zur Herstellung eines Copolyester, der eine Ethylennaphthalat-Einheit enthält, wie im Anspruch 1 angegeben, wobei der Gehalt der Ethylennaphthalat-Einheit 8 - 15 Mol-%, bezogen auf den Copolyester, beträgt.

9. Verfahren zur Herstellung eines Copolyester, der eine Ethylennaphthalat-Einheit enthält, wie im Anspruch 1 angegeben, wobei der erhaltene Copolyester eine intrinsische Viskosität zwischen 0,7 - 1,0 dl/g nach der Festkörperpolymerisation aufweist.

## Revendications

1. Procédé de production d'un copolyester contenant un motif naphtalate d'éthylène, comprenant l'ajout de 2,6-naphtalènedicarboxylate de diméthyle et d'un catalyseur de transestérification au mélange réactionnel pour une estérification directe de l'acide téréphtalique purifié et de l'éthylène glycol (procédé PTA) à un stade où le rapport d'estérification est compris dans la plage allant de 85 % à 98 % ; et tandis que le produit secondaire de l'alcool méthylique est totalement éliminé, l'ajout ultérieur d'un catalyseur de polycondensation pour conduire la polycondensation jusqu'à l'obtention d'un copolyester ayant une viscosité intrinsèque de 0,3 à 0,7 dl/g copolymérisé avec la structure suivante de 5 à 15 % en moles par rapport à la quantité totale de copolyester de copolymérisation

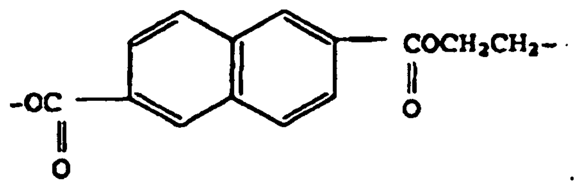

2. Procédé de production d'un copolyester contenant un motif naphtalate d'éthylène selon la revendication 1, dans lequel ledit catalyseur de transestérification est l'acétate de manganèse ou l'acétate de zinc avec une quantité ajoutée de 100 à 500 ppm par rapport à la quantité totale du motif naphtalate d'éthylène.

3. Procédé de production d'un copolyester contenant un motif naphtalate d'éthylène selon la revendication 1, dans lequel le 2,6-naphtalènedicarboxylate de diméthyle est ajouté pendant 93 à 97,5 % du rapport d'estérification du procédé de PTA.

4. Procédé de production d'un copolyester contenant un motif naphtalate d'éthylène selon la revendication 1, dans lequel le 2,6-raphtalenedicarboxylate de diméthyle est ajouté pendant 96 à 97,5 % du rapport d'estérification du procédé de PTA.

5. Procédé de production d'un copolyester contenant un motif naphtalate d'éthylène selon la revendication 1, dans lequel ledit catalyseur de polymérisation peut être choisi parmi un des catalyseurs à base d'antimoine incluant le trioxyde d'antimoine et l'acétate d'antimoine, ou choisi parmi un des catalyseurs à base de germanium incluant le dioxyde de germanium, l'oxyde de tétraéthylgermanium et l'oxyde de n-tétrabutylgermanium, ou choisi parmi un des catalyseurs à base de titane incluant l'oxyde de tétrabutyltitane; la quantité d'addition du catalyseur de polymérisation est de 10 à 600 ppm par rapport au poids du copolyester.

6. Procédé de production d'un copolyester contenant un motif naphtalate d'éthylène selon la revendication 1, dans lequel ledit catalyseur de polymérisation est le trioxyde d'antimoine et la quantité d'addition du catalyseur de polymérisation est dans la plage de 300 à 600 ppm par rapport au poids du copolyester.

7. Procédé de production d'un copolyester contenant un motif naphtalate d'éthylène selon la revendication 1, dans lequel la partie principale du copolyester est le motif téréphtalate de polyéthylène.

8. Procédé de production d'un copolyester contenant un motif naphtalate d'éthylène selon la revendication 1, dans lequel la teneur du motif naphtalate d'éthylène est de 8 à 15 % en moles par rapport au copolyester.

9. Procédé de production d'un copolyester contenant un motif naphtalate d'éthylène selon la revendication 1, dans lequel le copolyester obtenu a une viscosité intrinsèque de 0,7 à 1,0 dl/g après polymérisation à l'état solide.